# EUROPÄISCHE PATENTSCHRIFT

(11) **EP 2 323 517 B1**
(45) Veröffentlichungstag und Bekanntmachung des Hinweises auf die Patenterteilung: **07.12.2016**
(21) Anmeldenummer: 09778211.4
(22) Anmeldetag: 31.08.2009
(51) Int. Cl.: A47B 77/02, B60P 3/36

(54) **FREIZEITMOBIL-KÜCHENBLOCK**
CAMPER-VAN KITCHEN BLOCK
BLOC-CUISINE POUR VÉHICULE DE LOISIR

(30) Priorität: 29.08.2008 DE 102008044898
(43) Veröffentlichungstag der Anmeldung: 25.05.2011
(73) Patentinhaber: Dometic GmbH, 57074 Siegen (DE)
(72) Erfinder: MORESCO, Paolo, 36061 Bassano del Grappa (VI) (IT)
(74) Vertreter: Grosse, Felix Christopher
(86) Internationale Anmeldenummer: PCT/EP2009/006282
(87) Internationale Veröffentlichungsnummer: WO 2010/022981

(56) Entgegenhaltungen:
- EP-A- 0 922 611
- FR-A- 1 045 089
- FR-A- 2 682 576
- JP-A- 3 106 308
- US-A- 4 082 391
- US-A- 4 666 204
- US-B1- 6 182 305
- US-B1- 7 172 231

## Beschreibung

Die vorliegende Erfindung betrifft einen Freizeitmobil-Küchenblock mit einem Funktionsbereich der wenigstens ein Spülbecken und/-oder ein Kochfeld aufweist. Unter einem Freizeitmobil soll hier ein Wohnmobil, Caravan, Sportboot oder ähnliches verstanden werden. Demgemäß handelt es sich um einen Küchenblock, der bei beengten Raumverhältnissen aufgestellt wird, wie z.B. in FR1045089 A1 offenbart.

Der Begriff Küchenblock steht hier für ein Küchenmöbel, in dem vor allem die funktionalen Kernelemente einer Küche untergebracht sind. Dies sind in der Regel eine Spüle und/oder ein Kochfeld. Ein solcher Küchenblock weist meist eine Tragkonstruktion zur Aufnahme und Halterung der funktionalen Kernelemente auf. Diese wird in aller Regel von einer Arbeitsplatte nach oben hin abgedeckt.

Aufgrund der räumlichen Enge in einem Freizeitmobil besteht grundsätzlich der Bedarf einen Freizeitmobil-Küchenblock möglichst Platz sparend, und daher meist individuell angepasst, zu konstruieren. Zugleich besteht in zunehmendem Maße der Bedarf einen Küchenblock möglichst nicht nur in einem Freizeitmobil einbauen zu können, sondern diesen so flexibel wie möglich zu gestalten, um ihn mit möglichst wenigen Änderungen in unterschiedlichen Freizeitmobilen einbauen zu können.

Der Erfindung liegt daher die ***Aufgabe*** zugrunde, einen Freizeitmobil-Küchenblock zu schaffen, der die Platz- und Raumverhältnisse in einem Freizeitmobil optimal ausnutzt und zugleich flexibel an unterschiedliche Einbauanforderungen angepasst werden kann.

Die Lösung der Aufgabe gelingt mit dem Freizeitmobil-Küchenblock gemäß Anspruch 1. Vorteilhafte Weiterbildungen sind in den Unteransprüchen angegeben.

Es handelt sich also um einen Freizeitmobil-Küchenblock mit einem Funktionsbereich, der wenigstens ein Spülbecken und/oder ein Kochfeld aufweist, wobei der Funktionsbereich wenigstens ein im Grundriss rechteckig gestaltetes Funktionsmodul aufweist, dessen Länge doppelt so groß ist wie seine Breite und in dem das Spülbecken und/oder das Kochfeld angeordnet ist. Dieses spezifische Längen zu Breiten Verhältnis von 2:1 ermöglicht das systematische Aneinandersetzen einzelner Funktionsmodulen in der Art von Domino-Steinen. So können zum Beispiel zwei Module mit ihren Schmalseiten an der Langseite eines anderen Moduls angeordnet werden, ohne dass hierbei Spalten oder Lücken zwischen den Funktionsmodulen entstehen. Daher ist es sinnvoll, wenn die Module nicht nur einen rechteckigen Grundriss haben, sondern Quaderförmig gestaltet sind.

Zugleich wird durch die definierte und standardisierte Formgebung der Funktionsmodule auch das Austauschen eines Funktionsmoduls gegen ein anderes leicht ermöglicht. Der erfindungsgemäße Küchenblock kann aufgrund des Modulssystems also leicht an unterschiedlichste Einbaubedürfnisse angepasst und umgebaut werden.

Von daher ist es grundsätzlich möglich, dass der Funktionsbereich nur ein einzelnes Funktionsmodul aufweist. Bevorzugt weist der Funktionsbereich aber mehrere Funktionsmodule auf. Diese können zum Beispiel in gleicher Ausrichtung unmittelbar nebeneinander gesetzt werden. Denkbar ist aber auch, dass einzelne Module um 90 ° Grad zueinander gedreht angeordnet werden. Dann können zwei Module zum Beispiel an die Längsseite eines dritten Moduls gesetzt werden. Natürlich können auch mehr als zwei oder drei Funktionsmodule miteinander kombiniert werden.

Das Funktionsmodul weist ein Spülbecken mit einem bevorzugt rechteckigen Grundriss auf. Sinnvollerweise weist dieses Spülbecken-Funktionsmodul wiederum einen Wasserhahn auf, dessen Auslauf bevorzugt versenkbar, einschiebbar, abklappbar und/oder abschraubbar ausgeführt ist. So können komplett vormontierte Funktionsmodule geschaffen werden. Diese werden als komplette Funktionseinheit beim Innenausbau des Freizeitmobils in den Funktionsbereich des Freizeitmobil-Küchenblocks eingebaut. Es entfällt dann also die örtlich angepasste Montage des Wasserhahns vor Ort. Vielmehr muss nur die Tragkonstruktion des Kückenblocks an das Freizeitmobil angepasst werden. Dies ermöglicht den Herstellern von Freizeitmobilen den Küchenblock schnell und einfach zu montieren oder auch an kurzfristig geänderte Kundenwünsche bzw. Anforderungsprofile anzupassen. Hierzu muss dann nur ein Funktionsmodul gegen ein anderes Funktionsmodul ausgetauscht werden.

Weiterhin weist das Spülbecken des Spülbecken-Funktionsmoduls eine Halterung für ein Schneidebrett oder eine Abtropfwanne auf. Auch decken diese Einlagen das Spülbecken nur teilweise ab. Außerdem sind diese Einlagen vorzugsweise in Modullängsrichtung verschieblich in der Halterung gehalten. So kann bei entsprechender Formgebung des Wasserhahns das Schneidebrett im Spülbecken eingesetzt bleiben, und der Wasserhahn trotzdem betätigt werden. Durch das Verschieben des Schneidebrettes kann der Benutzer auch den Spalt frei dahin legen, wo er für seine jeweilige Anwendung gerade am günstigsten platziert ist.

Weiterbildend weist ein Funktionsmodul ein Kochfeld mit zwei Kochstellen auf. Das Kochfeld kann aus Glaskeramik, Edelstahl oder Ähnlichem bestehen. Die Kochstellen können mit Strom, Gas, Petroleum oder Ähnlichem betrieben werden.

Sinnvoll ist es auch, wenn ein Funktionsmodul ein Kochfeld mit nur einer einzelnen Kochstelle aufweist. Besonders vorteilhaft ist es wenn diese einzelne Kochstelle mittig in Bezug zu den Kochstellen eines benachbart angeordneten Zwei-Kochstellen-Funktionsmoduls ausgerichtet ist. So kann ein relativ großflächiger Kochbehälter, wie etwa eine Bratpfanne, der über den Rand des Funktionsmoduls hinaus ragt, benutzt werden ohne dass er die Nutzung des benachbarten Zwei-Kochstellen-Funktionsmoduls behindert.

Weiterbildend weist ein Kochfeld-Funktionsmodul ein Topfrost auf, der vorzugsweise höhenverstellbar ist. Dieser Topfrost dient dem Aufstellen eines Kochtopfes über der Kochstelle, was insbesondere bei gasbetriebenen Kochstellen vorteilhaft ist.

Weiterbildend sind die an der Oberseite eines Funktionsmoduls angeordneten Bedienknöpfe versenkbar ausgeführt. Dies kann insbesondere dann sinnvoll sein, wenn eine Abdeckplatte auf die Oberseite des Funktionsmoduls aufgelegt werden soll.

Weiterbildend weist ein Funktionsmodul eine Abtropfzone auf, die bevorzugt als Wanne mit einem rechteckigen Grundriss gestaltet ist. Bevorzugt ist dann im Bereich der Abtropfzone eine Halterung für einen herausnehmbaren Geschirr und/oder Besteckhalter angeordnet.

Zweckmäßigerweise weist ein, bevorzugt jedes, Funktionsmodul eine plattenförmige Abdeckung auf. Diese kann z. B. als Arbeitsplatte genutzt werden. Weiterbildend besteht die plattenförmige Abdeckung aus Glas, so dass sich insgesamt ein gefälliges Erscheinungsbild ergibt.

In Bezug auf das Spülbecken-Funktionsmodul ist es sinnvoll, wenn die plattenförmige Abdeckung aus zwei Einzelplatten besteht, die zueinander beweglich angeordnet sind. Dabei ist die erste Einzelplatte bevorzugt in einen Ausschnitt der zweiten Einzelplatte hineinklappbar ausgeführt. So kann die zweite Einzelplatte bereits auf das Spülbecken aufgelegt sein, ohne dass der Wasserhahn eingeklappt werden muss. Soll eine einheitliche Arbeitsplatte entstehen, wird der Wasserhahn eingeklappt bzw. dessen Auslauf abgeschraubt und die erste Abdeckplatte in den Ausschnitt der zweiten Abdeckplatte hineingeklappt.

Insgesamt ist es zweckmäßig, wenn der Funktionsbereich von einer durchgehenden Arbeitsplatte eingerahmt oder auf dieser aufliegend angeordnet ist. So kann die Arbeitsplatte zur Halterung des Funktionsbereiches herangezogen werden.

Nachfolgend wird die Erfindung anhand von in den Figuren gezeigten Ausführungsbeispielen näher erläutert. Darin zeigen schematisch:
- Fig. 1: eine ausschnittsweise räumliche Darstellung eines ersten Ausführungsbeispiels eines erfindungsgemäßen Freizeitmobil-Küchenblocks;
- Fig. 2: vier ausschnittsweise räumliche Darstellungen des in Fig. 1 gezeigten ersten Ausführungsbeispiels des Freizeitmobil-Küchenblocks ohne und mit unterschiedlichen Einsätzen in der Spüle;
- Fig. 3: Grundrisse zu sieben unterschiedlichen Anordnungen der Funktionsmodule.

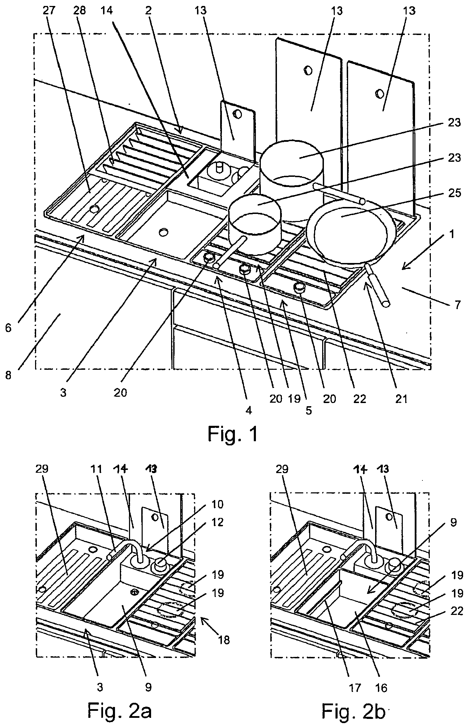

In Fig. 1 ist ein erstes Ausführungsbeispiel eines erfindungsgemäßen Freizeitmobil-Küchenblocks 1 ausschnittsweise dargestellt. Dieser weist einen Funktionsbereich 2 sowie vier darin angeordnete Funktionsmodule 3, 4, 5 und 6 auf. Der Funktionsbereich 2 ist in eine Arbeitsplatte 7 eingelassen, die wiederum auf einem Unterbau 8 befestigt ist. Der Unterbau 8 trägt also den Funktionsbereich 2 und die darin angeordneten Funktionsmodule 3, 4, 5 und 6.

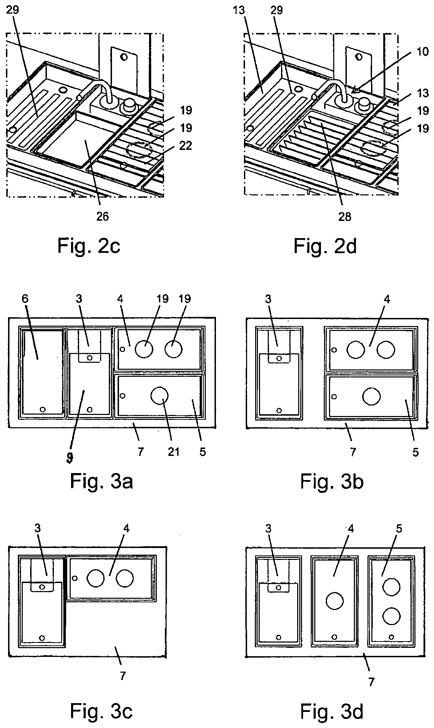

Wie man den Figuren 1 und 2 entnehmen kann, weist das Spülbecken-Funktionsmodul 3 ein Spülbecken 9 auf, das einen rechteckigen Grundriss hat. Weiterhin hat das Spülbecken-Funktionsmodul 3 einen Wasserhahn 10 mit einem versenkbaren Auslauf 11 und einem daneben angeordneten Ventilbetätigungsknauf 12. Der Auslauf 11 und der Betätigungsknauf 12 des Wasserhahns 10 sind nebeneinander auf einer Stufe in der Spülwanne 9 angeordnet. Das Spülbecken-Funktionsmodul 3 weist zudem eine Abdeckplatte 13 auf, die in eine Ausnehmung einer zweiten Abdeckplatte 14 angeordnet ist. So kann die kleinere und im Bereich des Wasserhahns 10 angelenkte Abdeckplatte 13 in die Ausnehmung der zweiten Abdeckplatte 14 hineingeklappt werden, wenn der ein- und ausschiebbare Auslauf 11 des Wasserhahns 10 in ausgefahrener Stellung ist. Ist der Wasserhahnauslass 11 wie in Fig. 1 gezeigt in seiner Funktionsstellung ist die erste Abdeckplatte 13 hoch gepklappt, während die zweite Abdeckplatte 14 auf dem Spülbecken aufliegt und dieses abdeckt. In Fig. 2 sind beide Abdeckplatten geöffnet um das Spülbecken 9 insgesamt frei zu geben.

Wie in den Figuren 2a, 2c und 2d gezeigt wird, sind in das Spülbecken 9 unterschiedliche Einsätze eingesetzt. In Fig. 2a ist kein Einsatz eingesetzt, so dass man dort das Spülbecken 9 alleine sieht. In Fig. 2b ist eine rechteckige Wanne 16 eingesetzt. Diese weist zwei seitliche Führungsschienen 17 auf, auf die in Fig. 2c eine flache Abtropfwanne 26 aufgesetzt ist. In Fig. 2d ist auf die Abtropfwanne 26 eine Abtropfhalterung 28 aufgesetzt.

Ferner weist das in Fig. 1 und 2 gezeigte Ausführungsbeispiel einen Funktionsbereich 2 mit einem Zwei-Kochstellen-Funktionsmodul 4 auf. Dieses hat ein Kochfeld 18 mit zwei Kochstellen 19. Beide Kochstellen 19 lassen sich über jeweils einen Drehknauf 20 getrennt ansteuern. Weiterhin weist das Funktionsmodul 4 einen Topfrost 22 auf. So können zwei Kochtöpfe 23 wie in Fig. 1 gezeigt auf dem Funktionsmodul 4 aufgestellt und getrennt von einander erhitzt werden. Weiterhin weist auch das Funktionsmodul 4 eine Abdeckplatte 13 aus dunkel eingefärbtem Glas auf. Diese Abdeckplatte 13 ist an ihrer Stirnseite mittels eines hier nicht näher dargestellten Scharniers am Funktionsmodul 4 angelenkt. Die Abdeckplatte 13 kann also wenn die Kochtöpfe 23 entfernt sind, auf das Kochstellen-Funktionsmodul 4 aufgelegt werden. Dadurch ergibt sich eine mit der Arbeitsplatte 7 bündige Arbeitsfläche, wie in Fig. 2 gezeigt.

In Fig. 1 ist rechts neben dem Zwei-Kochstellen-Funktionsmodul 4 unmittelbar angrenzend ein Ein-Kochstellen-Funktionsmodul 5 angeordnet. Dieses Funktionsmodul 5 weist ein Kochfeld 18 mit nur einer Kochstelle 21 auf, die mit einem Bedienknopf 19 angesteuert werden kann. Genau wie die Bedienknöpfe 19 des Funktionsmoduls 4 kann auch der Bedienknopf 19 des Funktionsmoduls 5 versenkt werden um ebenfalls eine Abdeckplatte 13 aus Glas auf das Funktionsmodul 5 klappen zu können.

Wie man der Fig. 1 entnehmen kann, ist es bei dem hier gezeigten Ausführungsbeispiel nun so, dass die Kochstelle 21 mittig zu den beiden Kochstellen 19 des Zwei-Kochstellen-Funktionsmoduls 4 ausgerichtet ist. Dies hat den Vorteil, dass wie man auch in Fig. 1 erkennt, eine über das Funktionsmodul 5 hinausragende Bratpfanne 25 sich in aller Regel zwischen den Kochtöpfen 21 aufstellen lässt. Es wird also eine optimale Platzausnutzung erzielt.

Weiterhin weist der Küchenblock 1 ein Abtropf-Funktionsmodul 6 auf, das im Wesentlichen aus einer flachen und rechteckigen Abtropfwanne 29 besteht. Auf den oberen Rand der Abtropfwanne 29 ist in Fig. 1 eine Geschirrhalterung 28 aufgesetzt. Neben der Geschirrhalterung 28 ist in Fig. 1 ein Schneidbrett 27 aus Glas eingesetzt, während in Fig. 2 eine groflächige Abdeckplatte 13 aus Glas auf die Wanne 29 aufgelegt ist.

In Fig. 3a bis 3g sind die Grundrisse zu sieben unterschiedlichen Anordnungsbeispielen der Funktionsmodule 3, 4, 5, 6 dargestellt. Dabei zeigt Fig. 3a eine Variante gegenüber der in Fig. 1 gezeigten Anordnung leicht abgewandelte Ausrichtung. Hierbei ist genau wie bei der Anordnung gemäß Fig. 1 links neben dem Spülbecken-Funktionsmodul 3 ein Abtropf-Funktionsmodul 6 angeordnet. Rechts vom Spülbecken-Funktionsmodul 3 sind die Kochstellen-Funktionsmodule 4 und 5 jedoch quer dazu ausgerichtet angeordnet. Die Module 4 und 5 sind mit anderen Worten um 90 Grad gedreht.

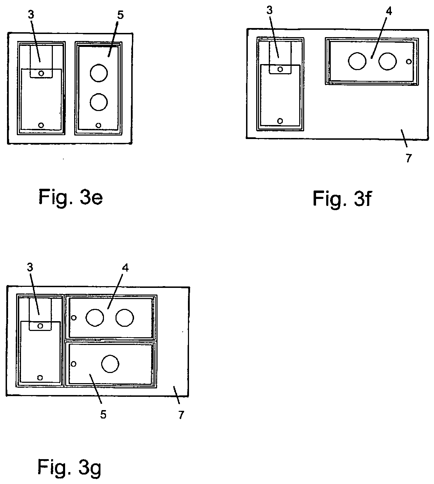

In Fig. 3b ist eine Variante gezeigt, bei der die beiden Funktionsmodule 4 und 5 beabstandet zum Funktionsmodul 3 ausgerichtet sind. In Fig. 3c ist nur ein Zwei-Kochstellen-Funktionsmodul 4 neben einem Spülbecken-Funktionsmodul 3 angeordnet. In Fig. 3d sind die einzelnen Funktionsmodule 3, 4 und 5 auseinandergezogen in der Arbeitsplatte 7 montiert. Ähnlich ist auch die Anordnung gemäß Fig. 3e, wobei hier auf ein Ein-Kochstellen-Funktionsmodul verzichtet wurde. Entsprechendes gilt für die Anordnung gemäß Fig. 3f, wobei hier gegenüber der Fig. 3e das Zwei-Kochstellen-Funktionsmodul 4 um 90 Grad gegenüber dem Spülbecken-Funktionsmodul 3 gedreht wurde.

In Fig. 3g ist eine Variante der Anordnung gemäß Fig. 3a gezeigt, bei der auf das Abtropf-Funktionsmodul 6 verzichtet wurde. Alle Varianten in der Fig. 3a zeigen, dass sich der erfindungsgemäße Küchenblock dadurch auszeichnet, dass der Funktionsbereich 2 mithilfe der erfindungsgemäß im Längen zu Breitenverhältnis von 2:1 gestalteten Funktionsmodule 3, 4, 5, 6 sehr flexibel und variabel an unterschiedliche Einbauerfordernisse in einem Freizeitmobil angepasst werden kann. Aufgrund des Rastermaßes sind also unterschiedlichste Ausrichtungen und Variationen des Funktionsbereichs 2 möglich. So ergibt sich ein regelrechtes Küchensystem, mit dem ein individuell angepasster Küchenblock 1 ohne großen Aufwand hergestellt werden kann.

## Patentansprüche

1. Freizeitmobil-Küchenblock (1) mit einem Funktionsbereich (2) der wenigstens ein Spülbecken (9) und/oder ein Kochfeld (10) aufweist,
wobei, der Funktionsbereich (2) wenigsten ein im Grundriss rechteckig gestaltetes Funktionsmodul (3, 4, 5, 6) aufweist, dessen Länge doppelt so groß ist wie seine Breite und in dem das Spülbecken (9) und/oder das Kochfeld (10) angeordnet ist,
**dadurch gekennzeichnet, dass**
das Funktionsmodul (3) ein Spülbecken (9) mit einem bevorzugt rechteckigen Grundriss aufweist, und das Spülbecken (9) des Spülbecken-Funktionsmoduls (3) eine Halterung für einen das Spülbecken (9) abdeckenden Einsatz aufweist, wobei der Einsatz das Spülbecken (9) nur teilweise abdeckt und vorzugsweise in Modullängsrichtung verschieblich in der Halterung (17) gehalten ist.

2. Freizeitmobil-Küchenblock nach Anspruch 1,
**dadurch gekennzeichnet, dass**
der Funktionsbereich (2) ein einzelnes Funktionsmodul (3, 4, 5, 6) aufweist.

3. Freizeitmobil-Küchenblock nach Anspruch 1,
**dadurch gekennzeichnet, dass**
der Funktionsbereich (2) mehrere Funktionsmodule (3, 4, 5, 6) aufweist.

4. Freizeitmobil-Küchenblock nach einem der vorhergehenden Ansprüchen,
**dadurch gekennzeichnet, dass**
das Spülbecken-Funktionsmodul (3) einen Wasserhahn (10) aufweist, dessen Auslauf (11) bevorzugt versenkbar, einschiebbar, abklappbar und/oder abschraubbar ausgeführt ist.

5. Freizeitmobil-Küchenblock nach einem der vorhergehenden Ansprüche,
**dadurch gekennzeichnet, dass**
dass das Funktionsmodul (4) ein Kochfeld (18) mit zwei Kochstellen (19) aufweist.

6. Freizeitmobil-Küchenblock nach einem der vorhergehenden Ansprüche,
**dadurch gekennzeichnet, dass**
das Funktionsmodul (5) ein Kochfeld (18) mit einer einzelnen Kochstelle (21) aufweist.

7. Freizeitmobil-Küchenblock nach einem der Ansprüche 5 und 6,
**dadurch gekennzeichnet, dass**
die Kochstelle (21) mittig in Bezug zu den Kochstellen (19) eines benachbart angeordneten Zwei-Kochstellen-Funktionsmodul (4) ausgerichtet ist.

8. Freizeitmobil-Küchenblock nach einem der vorhergehenden Ansprüche,
**dadurch gekennzeichnet, dass**
ein Kochfeld-Funktionsmodul (4, 5) einen Topfrost (22) aufweist, der vorzugsweise höhenverstellbar ist.

9. Freizeitmobil-Küchenblock nach einem der vorhergehenden Ansprüche,
**dadurch gekennzeichnet, dass**
an der Oberseite eines Funktionsmoduls (3, 4, 5, 6) angeordnete Bedienknöpfe (20) versenkbar ausgeführt sind.

10. Freizeitmobil-Küchenblock nach einem der vorhergehenden Ansprüche,
**dadurch gekennzeichnet, dass**
das Funktionsmodul (6) eine Abtropfzone aufweist, die bevorzugt als Abtropfwanne (29) ausgeführt ist.

11. Freizeitmobil-Küchenblock nach Anspruch 10,
**dadurch gekennzeichnet, dass**
im Bereich der Abtropfzone (29) eine Halterung für einen herausnehmbaren Geschirr- und/oder Besteckhalter (28) angeordnet ist.

12. Freizeitmobil-Küchenblock nach einem der vorhergehenden Ansprüche,
**dadurch gekennzeichnet, dass**
wenigstens ein Funktionsmodul (3, 4, 5, 6), bevorzugt jedes Funktionsmodul, eine plattenförmige Abdeckung (13) aufweist.

13. Freizeitmobil-Küchenblock nach Anspruch 12,
**dadurch gekennzeichnet, dass**
die plattenförmige Abdeckung (13) aus Glas besteht.

14. Freizeitmobil-Küchenblock nach einem der Ansprüche 12 oder 13,
**dadurch gekennzeichnet, dass**
die plattenförmige Abdeckung des Spülbecken-Funktionsmoduls (3) aus zwei Einzelplatten (13, 14) besteht, die zueinander beweglich angeordnet sind, wobei die erste Einzelplatte (13) bevorzugt in einen Ausschnitt der zweiten Einzelplatte (14) hineinklappbar ist.

15. Freizeitmobil-Küchenblock nach einem der vorhergehenden Ansprüche,
**dadurch gekennzeichnet, dass**
der Funktionsbereich (2) von einer durchgehenden Arbeitsplatte (7) eingerahmt oder auf dieser aufliegend angeordnet ist.

## Claims

1. Recreational vehicle kitchen block (1) comprising a functional area (2) having at least one sink (9) and/or one hob (10),
the functional area (2) having at least one functional module (3, 4, 5, 6), the plan view of which is rectangular and the length of which is twice as large as its width and in which the sink (9) and/or the hob (10) is arranged,
**characterised in that**
the functional module (3) has a sink (9) having a preferably rectangular plan view, and the sink (9) of the sink functional module (3) has a bracket for an insert which covers the sink (9), the insert only partially covering the sink (9) and preferably being held in the bracket (17) so as to be displaceable in the longitudinal direction of the module.

2. Recreational vehicle kitchen block according to claim 1,
**characterised in that**
the functional area (2) has a single functional module (3, 4, 5, 6).

3. Recreational vehicle kitchen block according to claim 1,
**characterised in that**
the functional area (2) has a plurality of functional modules (3, 4, 5, 6).

4. Recreational vehicle kitchen block according to any of the preceding claims,
**characterised in that**
the sink functional module (3) has a tap (10), the outlet (11) of which is preferably designed to be able to be lowered, retracted, folded away and/or unscrewed.

5. Recreational vehicle kitchen block according to any of the preceding claims,
**characterised in that**
the functional module (4) has a hob (18) comprising two cooking zones (19).

6. Recreational vehicle kitchen block according to any of the preceding claims,
**characterised in that**
the functional module (5) has a hob (18) comprising a single cooking zone (21).

7. Recreational vehicle kitchen block according to any of claims 5 and 6,
**characterised in that**
the cooking zone (21) is oriented centrally in relation to the cooking zones (19) of an adjacently arranged two-cooking-zone functional module (4).

8. Recreational vehicle kitchen block according to any of the preceding claims,
**characterised in that**
a hob functional module (4, 5) has a pot grate (22), which is preferably height-adjustable.

9. Recreational vehicle kitchen block according to any of the preceding claims,
**characterised in that**
control buttons (20) arranged on the top of a functional module (3, 4, 5, 6) are designed to be able to be lowered.

10. Recreational vehicle kitchen block according to any of the preceding claims,
**characterised in that**
a functional module (6) has a drip zone, which is preferably designed as a drip tub (29).

11. Recreational vehicle kitchen block according to claim 10,
**characterised in that**
a bracket for a removable holder (28) for dishes and/or flatware is arranged in the region of the drip zone (29).

12. Recreational vehicle kitchen block according to any of the preceding claims,
**characterised in that**
at least one functional module (3, 4, 5, 6), preferably each functional module, has a planar cover (13).

13. Recreational vehicle kitchen block according to claim 12,
**characterised in that**
the planar cover (13) consists of glass.

14. Recreational vehicle kitchen block according to either claim 12 or claim 13,
**characterised in that**
the planar cover of the sink functional module (3) consists of two individual plates (13, 14), which are arranged so as to be movable relative to one another, the first individual plate (13) preferably being able to be folded into a cut-out in the second individual plate (14).

15. Recreational vehicle kitchen block according to any of the preceding claims,
**characterised in that**
the functional area (2) is framed by a continuous worktop (7) or is arranged so as to rest thereon.

## Revendications

1. Bloc-cuisine pour véhicule de loisirs (1) avec une zone fonctionnelle (2) qui présente au moins un évier (9) et/ou une table de cuisson (10),
dans lequel la zone fonctionnelle (2) présente au moins un module fonctionnel (3, 4, 5, 6) conçu en rectangle en plan, dont la longueur est deux fois plus grande que sa largeur et dans laquelle l'évier (9) et/ou la table de cuisson (10) sont agencés,
**caractérisé en ce que**
le module fonctionnel (3) présente un évier (9) avec un plan de préférence rectangulaire, et l'évier (9) du module fonctionnel d'évier (3) présente un support pour un insert recouvrant l'évier (9), dans lequel l'insert recouvre uniquement partiellement l'évier (9) et est maintenu de préférence de manière mobile dans le sens longitudinal de module dans le support (17).

2. Bloc-cuisine pour véhicule de loisirs selon la revendication 1,
**caractérisé en ce que**
la zone fonctionnelle (2) présente un module fonctionnel (3, 4, 5, 6) individuel.

3. Bloc-cuisine pour véhicule de loisirs selon la revendication 1,
**caractérisé en ce que**
la zone fonctionnelle (2) présente plusieurs modules fonctionnels (3, 4, 5, 6).

4. Bloc-cuisine pour véhicule de loisirs selon l'une quelconque des revendications précédentes,
**caractérisé en ce que**
le module fonctionnel d'évier (3) présente un robinet à eau (10), dont la sortie (11) est réalisée de préférence de manière escamotable, insérable, rabattable et/ou dévissable.

5. Bloc-cuisine pour véhicule de loisirs selon l'une quelconque des revendications précédentes,
**caractérisé en ce que**
le module fonctionnel (4) présente une table de cuisson (18) avec deux emplacements de cuisson (19).

6. Bloc-cuisine pour véhicule de loisirs selon l'une quelconque des revendications précédentes,
**caractérisé en ce que**
le module fonctionnel (5) présente une table de cuisson (18) avec un emplacement de cuisson (21) individuel.

7. Bloc-cuisine pour véhicule de loisirs selon l'une quelconque des revendications 5 et 6,
**caractérisé en ce que**
l'emplacement de cuisson (21) est orienté au milieu par rapport aux emplacements de cuisson (19) d'un module fonctionnel à deux emplacements de cuisson (4) agencé de manière contiguë.

8. Bloc-cuisine pour véhicule de loisirs selon l'une quelconque des revendications précédentes,
**caractérisé en ce que**
un module fonctionnel de table de cuisson (4, 5) présente une grille (22) qui est de préférence réglable en hauteur.

9. Bloc-cuisine pour véhicule de loisirs selon l'une quelconque des revendications précédentes,
**caractérisé en ce que**
des boutons de commande (20) agencés sur le côté supérieur d'un module fonctionnel (3, 4, 5, 6) sont réalisés de manière escamotable.

10. Bloc-cuisine pour véhicule de loisirs selon l'une quelconque des revendications précédentes,
**caractérisé en ce que**
le module fonctionnel (6) présente une zone d'égouttage qui est réalisée de préférence comme un bac d'égouttage (29).

11. Bloc-cuisine pour véhicule de loisirs selon la revendication 10,
**caractérisé en ce que**
un support pour un porte-vaisselle et/ou porte-couverts retirable (28) est agencé dans la zone de la zone d'égouttage (29).

12. Bloc-cuisine pour véhicule de loisirs selon l'une quelconque des revendications précédentes, **caractérisé en ce que**
au moins un module fonctionnel (3, 4, 5, 6), de préférence chaque module fonctionnel, présente un recouvrement en forme de plaque (13).

13. Bloc-cuisine pour véhicule de loisirs selon la revendication 12,
**caractérisé en ce que**
le recouvrement en forme de plaque (13) est constitué de verre.

14. Bloc-cuisine pour véhicule de loisirs selon l'une quelconque des revendications 12 ou 13,
**caractérisé en ce que**
le recouvrement en forme de plaque du module fonctionnel d'évier (3) est constitué de deux plaques individuelles (13, 14) qui sont agencées de manière mobile l'une à l'autre, dans lequel la première plaque individuelle (13) peut être rabattue de préférence dans une partie de la seconde plaque individuelle (14).

15. Bloc-cuisine pour véhicule de loisirs selon l'une quelconque des revendications précédentes,
**caractérisé en ce que**
la zone fonctionnelle (2) est encadrée par une plaque de travail (7) continue ou est agencée reposant sur celle-ci.
